# EUROPEAN PATENT APPLICATION

(11) **EP 2 230 123 A2**
(43) Date of publication of application: **22.09.2010**
(21) Application number: 10250174.9
(22) Date of filing: 02.02.2010
(51) Int. Cl.: B60L 9/00, B60L 11/18

(54) **Railway system including power feeding equipment installed on railway track between stations**

(30) Priority: 16.03.2009 JP 2009062219
(71) Applicant: Hitachi, Ltd., Chiyoda-ku Tokyo 100-8280 (JP)
(72) Inventor: Shinomiya, Takeshi, Tokyo 100-8220 (JP); Toyota, Eiichi, Tokyo 100-8220 (JP); Shimada, Motomi, Tokyo 100-8220 (JP)
(74) Representative: Paget, Hugh Charles Edward

(57) **Abstract**

There is provided a railway system enabling a railcar including an onboard power storage to run to a nearest station with the minimum capacity of the onboard power storage. The power storage is installed on the railcar and inter-station power feeding equipment is provided. The inter-station power feeding equipment is a power supply facility using a contact line or charging post fed with power from a power supply system different from the power supply system of a contact line near a station. The distance between the station and the inter-station power feeding equipment or the distance between the inter-station power feeding equipment and the inter-station power feeding equipment is within an operating range over which the train can run with the maximum state of charge of the power storage. The onboard power storage can be charged at a location where the inter-station power feeding equipment is provided. Thus, the railway system can reduce the capacity requirements of the onboard power storage and enables the railcar to run to the nearest station.

## Description

### BACKGROUND OF THE INVENTION

### Field of the Invention

The present invention relates to driving equipment of railcars and, in particular, to a railway system technology installing a power storage on railcars to enable the railcars to run to a nearest station.

### Description of the Related Art

Efforts are being actively made to use power storage technology in railcars to promote energy saving. One example is hybrid internal combustion railcars in which conventional internal combustion railcars driven by diesel engines use a motor-controlled drive system with an inverter device as in electric railcars and to which electric power is supplied by an engine generator and a power storage. The electrification of the drive system and installation of the power storage enable reuse of regenerative energy, which was impossible in conventional internal combustion railcars, thereby saving energy. Other systems are also being developed such as a system in which an electric motor car powered from contact lines is provided with a power storage to supply power to drive the electric motor car. In an overhead-contact-line hybrid system, a power storage absorbs regenerative energy from regenerative braking to prevent regeneration from being canceled in a section that does not include a powering car and the stored energy is reused during powering, thereby saving energy.

A system configuration for a hybrid internal combustion car is disclosed in Japanese Patent Laid-Open Publication No. 2004-282859 in which an power storage is used in conjunction with an electric generator driven by an engine and fuel cells are used in conjunction with an electric power storage with the aim of providing a railcar driving device that reduces manpower cost required for maintenance and is environmentally benign. Japanese Patent Laid-Open Publications No. 2002-281610 and No. 2005-86876 disclose system configurations in which a power storage is used in conjunction with contact lines and the power storage can be charged in specific locations with the aim of providing an electric motor car capable of running without using contact lines in some or all sections of railway track.

However, the systems described above use electric power from the onboard power storage to operate a train during normal operations and are not intended to enable railcars running in a section of track provided with contact lines to safely run to a station in the event of a failure of power feeding from the contact lines.

In the event of trouble with a contact line such as power outage, railcars running in a section of track along which the contact line are provided cannot receive electric power through the contact line and becomes unable to run. If a train becomes unable to run between stations, passengers need to be put off the train to the track and escorted to safety. Therefore, there is a need to run the train to a station to take the passengers to the station if trouble with a contact line such as power outage occurs.

However, driving a train by electric energy from power storage installed on the train to a nearest station may require stored electric energy equivalent to the energy required for the train to run half the distance between farthest stations even over a flat emergency run distance, for example. This means increase of the capacity requirements of the onboard power storage. Since power failure of a contact line in a section of a normal railway track is very rare, it is economically disadvantageous to install a large-capacity power storage on a train running on such normal railway track, assuming the case of emergency run to a nearest station.

Under these circumstances, an object of the present invention is to provide a railway system that enables a train to run to a nearest station in the event of trouble with a power feeding line from a power supply and reduces the capacity requirements of an power storage installed on the train.

### SUMMARY OF THE INVENTION

Inter-station power feeding equipment is contact lines that receive power from a system different from that of contact lines provided near a station, or charging posts that receive power from systems different from that of a contact line, the contract lines or the charging posts are provided between stations in a section of track along which contact lines are provided.

If contact lines are continuously provided between stations, contact lines may be separated by an air section and may be fed with power from different power supply systems. The distance between a station and inter-station power feeding equipment or the distance between pieces of inter-station power feeding equipment in a section in which emergency run is performed when the contact line fails or power failure occurs is within the operating range over which a train can run with the maximum state of charge of the onboard power storage. The charging post is power feeding equipment that receives power from a system different from that of the contact lines. At the output of the charging post, a cable and a connector device for connecting the output of the charging post to a train is provided so that power can be supplied to the train stopped in the vicinity of the charging post. The train receives power from the charging post to charge the onboard power storage.

According to the present invention, there is provided a railway system that enables a train to run to a nearest station in the event of trouble with a power feeding line from a power supply and reduces the capacity requirements of a power storage installed on the train.

### BRIEF DESCRIPTION OF THE DRAWINGS

FIG. 1 is a diagram illustrating an exemplary embodiment of an installation arrangement of inter-station power feeding equipment according to the present invention;
FIG. 2 is a diagram illustrating a first exemplary embodiment of an installation arrangement of inter-station power feeding equipment according to the present invention;
FIG. 3 is a diagram illustrating a second exemplary embodiment of an installation arrangement of inter-station power feeding equipment according to the present invention;
FIG. 4 is a diagram illustrating an exemplary embodiment of electric motor car control equipment and a charging post according to the present invention;
FIG. 5 is a diagram illustrating a second exemplary embodiment of electric motor car control equipment and a charging post according to the present invention; and
FIG. 6 is a diagram illustrating a third exemplary embodiment of electric motor car control equipment and a charging post according to the present invention.

### DETAILED DESCRIPTION OF THE PREFERRED EMBODIMENTS

Embodiments of the present invention will be described with reference to drawings.

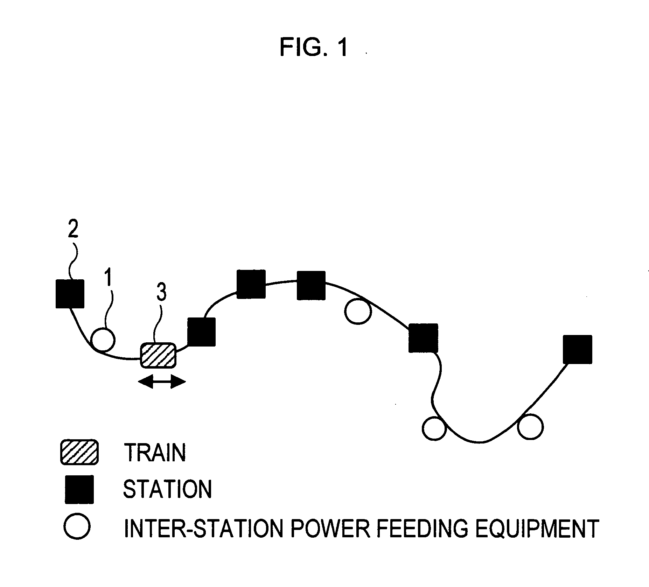

FIG. 1 schematically illustrates an exemplary installation arrangement of inter-station power feeding equipment. The inter-station power feeding equipment 1 receives power from a power supply system different from that of a contact line or a power supply facility near a station 2. The inter-station power feeding equipment is installed between stations 2.

In a section of track in which overhead-contact-line/power-storage hybrid railcars that run on a track along which contact lines are continuously provided performs emergency run, inter-station power feeding equipment 1 is provided so that the distance between a station 2 and a piece of the inter-station power feeding equipment 1 or between pieces of inter-station power feeding equipment 1 is within the operating range over which a train 3 can run with the maximum state of charge of an power storage installed on the train 3. This arrangement can reduce the power storage installed on the train 3 both in capacity requirements and size. The reduction of the power storage in capacity requirements and size can reduce the cost of the onboard power storage and enables operations with saved energy due to the weight reduction of the railcars.

For overhead-contact-line/power-storage hybrid railcars that run in a section without a contact line, the onboard power storage can be charged from the inter-station power feeding equipment 1, thereby the minimum capacity of the power storage required for the railcars to run in the section between stations can be reduced.

As described above, the distance between pieces of inter-station power feeding equipment 1 installed is preferably within the operating range over which the train 3 can run with the maximum state of charge of the power storage on the train 3. More specifically, locations of the inter-station power feeding equipment 1 can be determined by taking into account of the length of the railway track as well as the altitude of the railway track. In the section between stations with high ridership, the distance between locations of the inter-station power feeding equipment 1 may be shorter than other sections between stations because such a section requires larger electric energy for run.

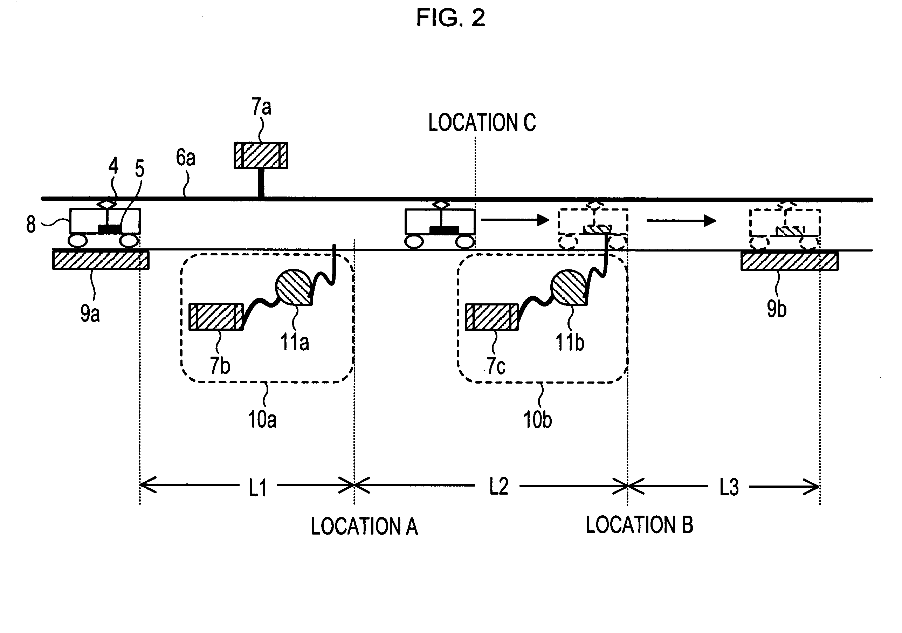

FIG. 2 illustrates a first exemplary embodiment of an installation arrangement of inter-station power feeding equipment according to the present invention.

In FIG. 2, a train 8 runs using as driving power source the power supply from a contact line 6a continuously provided along a track and pieces of inter-station power feeding equipment 10a, 10b are installed at locations A and B between stations 9a and 9b.

Here, L1 denotes the distance between station 9a and location A, L2 denotes the distance between locations A and B, and L3 denotes the distance between location B and station 9b. Each of L1, L2 and L3 is set shorter than the operating range over which the train 8 powered by an onboard power storage 5 can run. Charging posts 11a and 11b are provided in the pieces of inter-station power feeding equipment 10a and 10b, respectively. The charging posts 11a and 11b receives power from power supply facilities 7b and 7c, respectively, that are power supply systems different from the power supply facility 7a that feeds power to the contact line 6a. By using the charging posts 11a and 11b, the power storage 5 installed on the train 8 can be charged from the inter-station power feeding equipment 10a, 10b.

If power feeding from the contact line 6a receiving power from the power supply facility 7a stops at location C due to power outage while the train 8 is running between the stations 9a and 9b, the train 8 moves to location B where the inter-station power feeding equipment 10b is provided by using the power storage 5 on the train 8 as the driving power source. At location B, the power storage 5 on the train 8 is charged. Then, the train 8 performs emergency run to evacuate to the station 9b by using the power storage 5 as the driving power source.

The maximum storage capacity of the power storage 5 on the train 8 needs to be only the capacity required for the train 8 to travel over the section that requires the largest storage capacity among L1, L2 and L3, rather than the capacity required for the train 8 to travels to station 9a or 9b, that is, the half the distance between stations 9a and 9b. Accordingly the capacity of the onboard power storage 5 required for emergency run and therefore the size of the power storage 5 can be reduced.

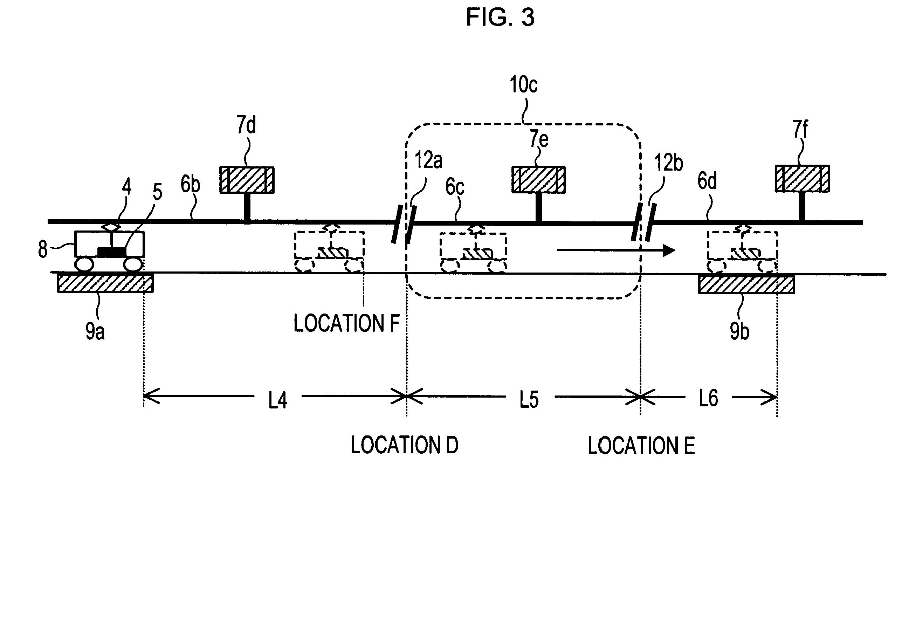

FIG. 3 illustrates a second exemplary embodiment of an installation arrangement of inter-station power feeding equipment of the present invention.

In the example in FIG. 3, a train 8 runs on electric power from contact lines 6b, 6c and 6d provided continuously along a track and inter-station power feeding equipment 10c is provided between stations 9a and 9b.

Here, L4 denotes the distance between station 9a and location D, L5 denotes the distance between locations D and E, and L6 denotes the distance between location E and station 9b. The distances L4, L5 and L6 are smaller than the operating range over which the train 8 can run on electricity from the power storage 5 on the train 8.

Inter-station power feeding equipment 10c is provided between the power supply facilities 7d and 7f. The inter-station power feeding equipment 10c is a contact line 6c that receives power from a power supply facility 7e different from the power supply facility 7d and 7f from which the contact line 6b and 6d near the station receive power. The contact line 6c a receives power from a power supply system isolated from the power supply systems near the stations by air sections 12a and 12b. This arrangement enables the power storage 5 on the train 8 to be charged from the inter-station power feeding equipment 10c.

If the contact line 6b receiving power from the power supply facility 7c fails to feed power at location F while the train 8 is running between stations 9a and 9b, the train 8 uses the power storage 5 on the train 8 as the power supply to travel to station 9a or location D where the inter-station power feeding equipment 10c is provided, whichever is nearer. If the train moves to location D, the power storage 5 on the train 8 is charged from the contact line 6c and then the train 8 performs emergency run to evacuate to station 9a or 9b by using power from the power storage 5 as driving power supply.

Thus, the maximum capacity of the power storage 5 on the train 8 needs to be only the capacity required for the train 8 run over distance L4 or L6 whichever requires more capacity, rather than the capacity required for the train 8 to run to station 9a or 9b, that is, half the distance between stations 9a and 9b. Accordingly the capacity of the power storage 5 on the train 8 required for emergency run and therefore the size of the power storage can be reduced. By making the capacity of the power storage 5 greater than the power storage capacity required for the train 8 to run over L5, the train 8 can perform emergency run to evacuate to station 9a or 9b in the event of a failure of the inter-station power feeding equipment 10c during running in the section from location D to location E.

The power receiving method illustrated in FIG. 3 does not need special onboard equipment, except the equipment for normal running. In contrast, the power receiving method illustrated in FIG. 2 that uses charging posts needs onboard equipment that is not used in normal running.

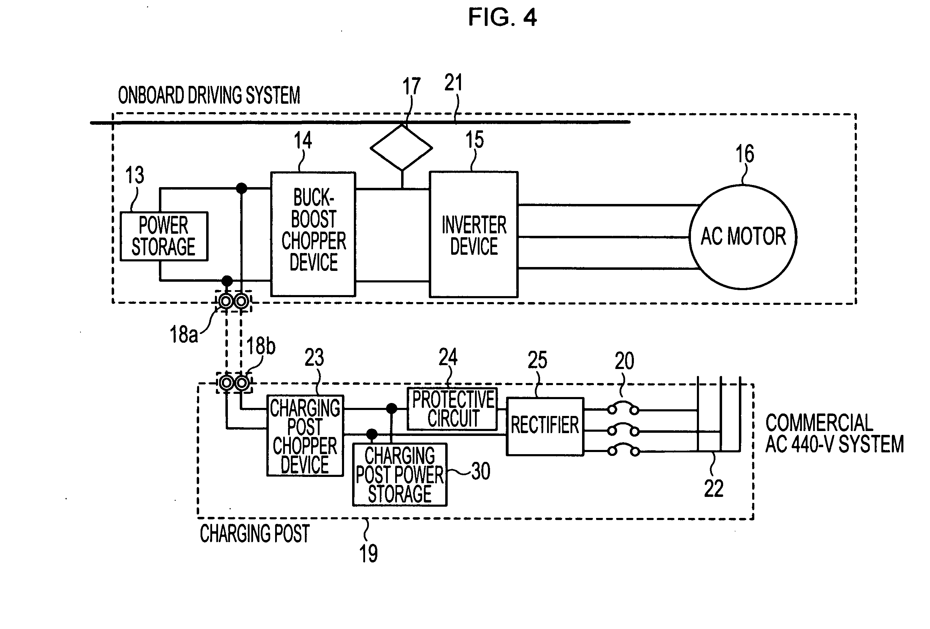

One embodiment of electric motor car control equipment of the present invention and power receiving using charging posts illustrated in FIG. 2 will be described with reference to FIG. 4.

The onboard driving system includes a power storage 13, a buck-boost chopper device 14, an inverter device 15, an alternating-current (AC) motor 16, current collecting equipment 17, and an onboard connector device 18a. The charging post includes an on-post connector device 18b, fuses 20, charging post chopper device 23, a protective circuit 24, a rectifier 25, a charging post power storage 30, and a commercial power source 22.

The inverter device 15 in the onboard driving system receives direct-current (DC) power from a contact line 21 through the current collecting equipment 17 or DC power from the buck-boost chopper device 14, converts the DC power to three-phase AC power, and outputs the three-phase AC power to the AC motor 16. The AC motor 16 receive the three-phase AC power output from the inverter device 15, converts the three-phase AC power to axial torque, and outputs the axial torque. The inverter device 15 variably controls the output voltage and AC frequency of the inverter device 15 to cause the AC motor 16 to output torque based on a instruction from control equipment, not shown. A reduction gear, not shown, amplifies the axial torque output from the AC motor 16 and outputs the amplified axial torque to drive the wheel shafts of the electric motor car to accelerate or decelerate the electric motor car. The buck-boost chopper device 14 is provided to electrically interconnect the power storage 13 and the contact line 21 and is connected to the power storage 13. The buck-boost chopper device 14 increases the voltage of the power storage 13 to the supply voltage of the contact line 21 or decreases the supply voltage of the contact line 21 to the voltage of the power storage 13. The power storage 13 is connected to the buck-boost chopper device 14 so as to receive DC power output from the buck-boost chopper device 14 and output DC power to the buck-boost chopper device 14. An onboard connector device 18a connectable to the charging post 19 is connected to a DC part between the power storage 13 and the buck-boost chopper device 14.

The charging post 19 includes the rectifier 25 that receives three-phase AC power from the commercial power source 22, converts it to DC power, and output the DC power. The commercial power source 22 receives power from a system different from the power supply to the contact line 21 and is capable of feeding three-phase AC power. Protective fuses 20 are connected between the commercial power source 22 and the rectifier 25. The fuses 20 disconnect the circuitry in the event of an abnormality such as an overcurrent. The input of the charging post chopper device 23 is connected to an DC output of the rectifier 25. The charging post chopper device 23 converts an input voltage from the rectifier 25 and outputs the converted voltage to the on-post connector device 18b. The protective circuit 24 which disconnects the circuitry in the event of an abnormality is connected between the rectifier 25 and the charging post chopper device 23. A charging post power storage 30 may be connected to the input of the charging post chopper device 23 in parallel with the output of the rectifier 25. The on-post connector device 18b that enables connection to the onboard driving system is connected to the output of the charging post chopper device 23. The onboard driving system and the charging post 19 can be interconnected through a dedicated cable between the onboard connector device 18a and the on-post connector device 18b.

Operation of the present exemplary embodiment will be described below.

Operation performed when the contact line 21 is functioning properly will be described first. When an electric motor car train running on a track along which contact lines are continuously installed is to be accelerated, DC power is received from the contact line 21 and converted to AC power by the inverter device 15, which then outputs the AC power to drive the AC motor 16. When the electric motor car train is to be decelerated, the inverter device 15 is caused to perform regenerative operation to cause the AC motor 16 to output brake torque and regenerative power output from the inverter device 15 is absorbed by the power storage 13 through the buck-boost chopper device 14 to charge the power storage 13 to the maximum allowable state of charge.

If the contact line 21 fails to feed power due to a failure such as contact line power outage, the DC power output from the buck-boost chopper device 14, that is, input power to the inverter device 15 is derived from the DC power output from the power storage 13. This can accelerate the electric motor car even when the power cannot be fed from the contact line 21 due to a failure such as contact line power outage. Accordingly, the electric motor car can perform emergency run to evacuate to a station. When the electric motor car is to be decelerated, the inverter device 15 is caused to perform regenerative operation to cause the AC motor 16 to output brake torque and regenerative power output from the inverter device 15 is absorbed by the power storage 13 through the buck-boost chopper device 14. If the power storage 13 cannot absorb the regenerative power, a resistor consumes the regenerative power or an air brake is used to mechanically decelerate the electric motor car.

Charging of the onboard power storage 13 when power cannot be fed from the contact line 21 due to power outage of the contact line 21 or a failure of the current collecting equipment 17 will be described next. In such an event, the train is stopped near a location where a charging post 19 is provided and the onboard connector device 18a of the onboard driving system is connected to the on-post connector device 18b through a dedicated cable. Power to be input into the power storage 13 is derived from the commercial power source 22. Since the power input to be into the power storage 13 needs to be within a predetermined DC voltage range, the rectifier 25 converts the AC power from the commercial power source 22 into DC power, the charging post chopper device 23 converts the voltage of the DC power into a voltage within the predetermined voltage range, and the charging post charges the power storage 13 up to an amount of charge in a predetermined range.

If a charging post power storage 30 is connected to the input of the charging post chopper device 23, the input power to the power storage 13 can be derived from the charging post power storage 30. Since it is infrequent to supply power from the charging post to the train, charging of the charging post power storage 30 is not urgent. Accordingly, input circuitry for inputting power from the commercial power source may be a facility with only a small capacity and therefore only small investment in the facilities is required. Furthermore, if the commercial power source is temporarily fails, the train can be fed with power from the charging post power storage 30. Accordingly, emergency power feeding from the charging post power storage 30 has a high degree of effectiveness.

Although the provision of the charging post power storage 30 has the advantageous effects described above, the power storage 13 can be charged from the commercial power source 22 in a configuration that does not include the charging post power storage 30, of course.

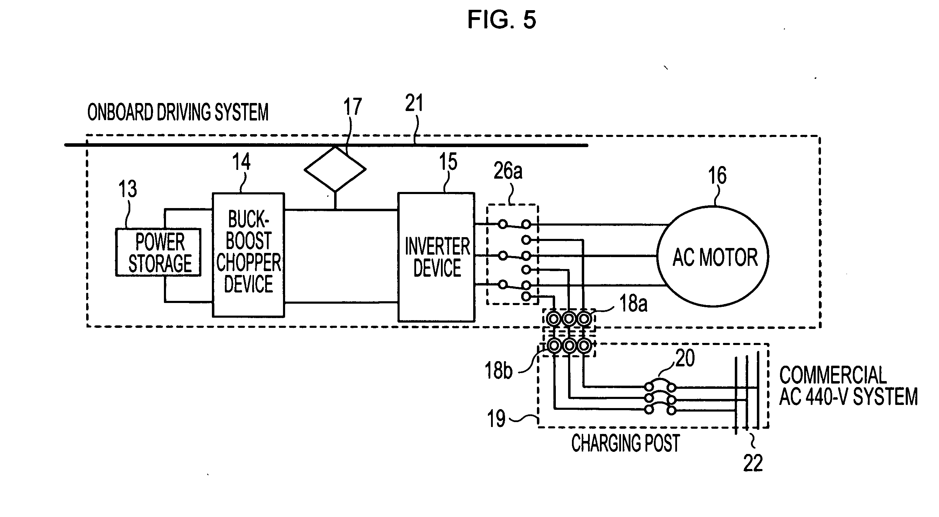

The second exemplary embodiment of electric motor car control equipment and power reception from a charging post depicted in FIG. 2 according to the present invention will be described with reference to FIG. 5.

An inverter device 15 of an onboard driving system receives DC power output from a buck-boost chopper device 14 or a contact line 21, converts the DC power to three-phase AC power, and outputs the three-phase AC power to an AC motor 16. The AC motor 16 receives the three-phase AC power from the inverter device 15, converts the three-phase AC power into axial torque, and outputs the axial torque. The inverter device 15 variably controls the output voltage and AC frequency of the inverter device 15 to cause the AC motor 16 to output torque based on a instruction from control equipment, not shown. A reduction gear, not shown, amplifies the axial torque output from the AC motor 16 and outputs the amplified axial torque to drive the wheel shafts of the electric motor car to accelerate or decelerate the electric motor car.

The buck-boost chopper device 14 increases the voltage of the power storage 13 to the supply voltage of the contact line 21 or decreases the supply voltage of the contact line 21 to the voltage of the power storage 13. The buck-boost chopper device 14 is connected to the power storage 13 so that the power storage 13 can be electrically connected to the contact line 21. The power storage 13 is connected to the buck-boost chopper 14 so that the power storage 13 receives DC power from the buck-boost chopper device 14 and outputs DC power to the buck-boost chopper device 14. Switches 26a are connected between the inverter device 15 and the AC motor 16. The switches 26a are capable of connecting three-phase AC power lines connected to the inverter device 15 alternatively to the AC motor 16 and an onboard connector device 18a. A charging post 19 includes an on-post connector device 18b at a part through which power fed from a commercial power source 22 is output to the onboard driving system. The on-post connector device 18b is connectable to the onboard connector device 18a. The commercial power source 22 receives power from a power supply system different from the power source of the contact line 21 and is capable of feeding three-phase AC power to the charging post 19. Protective fuses 20 are connected between the on-post connector device 18b and the commercial power source 22. The fuses 22 disconnect the circuitry in the event of an abnormality such as an overcurrent.

Operation of the present embodiment will be described below.

Operation performed when the contact line 21 is functioning properly will be described first. When the electric motor car running on a track along which a contact line 21 is provided continuously is to be accelerated, the switches 26a are turned to the side for connecting the inverter device 15 to the AC motor 16. The inverter device 15 receives DC power from the contact line 21 and outputs AC power to drive the AC motor 16. When the electric motor car running on the track along which the contact line 21 is installed continuously is to be decelerated, the inverter device 15 performs regenerative operation to cause the AC motor 16 to output brake torque and the power storage 13 absorbs regenerative power output from the inverter device 15 through the buck-boost chopper device 14 so that the power storage 13 is charged up to the maximum allowable state of charge. If the power storage 13 has been fully charged, the regenerative power is fed back to the contact line 21 through current collecting equipment 17.

Operation performed when power cannot be fed from the contact line 21 due to power outage of the contact line 21 or a failure of the current collecting equipment 17 will be described next. In such an event, power to be input into the inverter device 15 is derived from DC power output from the buck-boost chopper device 14, that is, DC power output from the power storage 13. This can accelerate the electric motor car even when power cannot be fed from the contact line 21 due to a failure such as power outage of the contact line 21. Accordingly, the electric motor can perform emergency run to evaluate to a station when power cannot be fed from the contact line. When the electric motor car is to be decelerated, the inverter device 15 performs regenerative operation to cause the AC motor 16 to output brake torque and the power storage 13 absorbs regenerative power output from the inverter device 15 through the buck-boost chopper device 14 to the maximum allowable state of charge. If the power storage 13 cannot absorb the regenerative power, a resistor consumes the regenerative power or an air brake is used to mechanically decelerate the electric motor car.

When the onboard power storage 13 is to be charged, the train is stopped near a location where a charging post 19 is provided, and the onboard connector device 18a of the onboard driving system is connected to the on-post connector device 18b through a dedicated cable. The switches 26a are turned to the side for connecting the inverter device 15 to the onboard connector device 18a. Input power to the power storage 13 is derived from the commercial power source 22. The inverter device 15 converts the AC power from the charging post 19 into DC power, the buck-boost chopper device 14 decreases the voltage of the DC power, and the power storage 13 is charged up to an amount of charge in a predetermined range. The present exemplary embodiment feeds AC power from the commercial power source 22 to the onboard driving system without conversion to DC power. Accordingly, the number of apparatuses on the charging post 19 can be reduced as compared with the exemplary embodiment illustrated in FIG. 4 (in which the onboard connector device 18a is provided between the power storage 13 and the buck-boost chopper device and AC power from the commercial power source 22 is converted into DC power on the charging post 19).

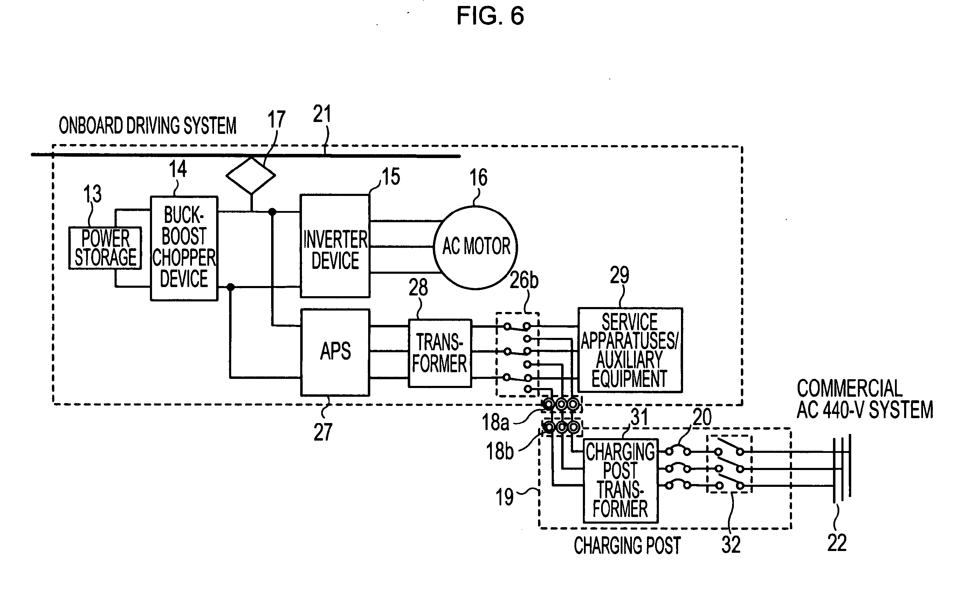

A third exemplary embodiment of electric motor car control equipment and power reception from a charging post depicted in FIG. 2 according to the present invention will be described below with reference to FIG. 6.

An inverter device 15 of an onboard driving system receives DC power from a buck-boost chopper 14 or a contact line 21, converts the DC power into three-phase AC power, and outputs the three-phase AC power to an AC motor 16. The AC motor 16 receives the three-phase AC power from the inverter device 15, converts it into axial torque and outputs the axial torque. The inverter device 15 variably controls the output voltage and AC frequency of the inverter device 15 to cause the AC motor 16 to output torque based on a instruction from control equipment, not shown. A reduction gear, not shown, amplifies the axial torque output from the AC motor 16 and outputs the amplified axial torque to drive the wheel shafts of the electric motor car to accelerate or decelerate the electric motor car.

A buck-boost chopper device 14 increases the voltage of the power storage 13 to supply voltage of the contact line 21 or decreases the supply voltage of the contact line 21 to the voltage of the power storage 13. The buck-boost chopper device 14 is connected to the power storage 13 so that the power storage 13 can be electrically connected to the contact line 21. The power storage 13 is connected to the buck-boost chopper device 14 so as to receive DC power output from the buck-boost chopper device 14 and to output DC power to the buck-boost chopper device 14.

An auxiliary power supply (APS) 27 is connected in parallel to a DC part between the buck-boost chopper device 14 and the inverter device 15. The APS 27 receives DC power output from the buck-boost chopper device 14 or the contact line 21, converts the DC power into three-phase AC power and outputs the three-phase AC power to a transformer 28. The transformer 28 receives the three-phase AC power output from the APS 27, transforms it to a predetermined AC voltage required as supply voltage to the service apparatuses/auxiliary equipment 29, and feeds the three-phase AC power to the service apparatuses/auxiliary equipment 29. The service apparatuses/auxiliary equipment 29 is service power supplied equipment such as lighting and air conditioners and receives the voltage transformed by the transformer 28 to service supply voltage. An onboard connector device 18a is connected in parallel to an AC part between the transformer 28 and the service apparatuses/auxiliary equipment 29. Switches 26b may be connected between the transformer 28 and the service apparatuses/auxiliary power equipment 29. The switches 26b are capable of connecting the output of the transformer 28 alternatively to the service apparatuses/auxiliary equipment 29 and the onboard connector device 18a.

A charging post 19 includes commercial power supply system connection switches 32, fuses 20, a charging post transformer 31, and a on-post connector device 18b. The on-post connector device 18b is provided in a power supply part for supplying power to the onboard driving system and is connectable to the onboard connector device 18a. The charging post 19 feeds power from a commercial power source 22 to the on-post connector device 18b through the commercial power supply system connection switches 32, the fuses 20 and the charging post transformer 31. When the onboard connector device 18a is connected to the on-post connector device 18b, power from the commercial power source 22 is fed to the onboard driving system. The commercial power source 22 receives power from a system different from the power supply of the contact line 21 and is capable of feeding three-phase AC power to the charging post 19. Protective fuses 20 that disconnect the circuitry in the event of an abnormality such as an overcurrent are connected between the on-post connector device 18b and the commercial power source 22.

Operation of the present exemplary embodiment will be described below.

Operation performed when the contact line 21 is functioning properly will be described first. While the train is running on a track along which a contact line is continuously provided, power is usually supplied to the auxiliary equipment as follows. The current collecting equipment 17 receives DC power from the contact line 21, the APS 27 converts the DC power into AC power and outputs the AC power to the transformer 28, and the transformer 28 transforms the voltage of the AC power to a predetermined AC voltage to feeds the power to the service apparatuses/auxiliary equipment 29.

An operation performed when power cannot be fed from the contact line 21 due to a failure such as power outage of the contact line 21 or a failure in the current collecting equipment 17 will be described next. In such an event, input power to the APS 27 is derived from DC power output from the buck-boost chopper device 14, that is, DC power output from the power storage 13. With this arrangement, power can be supplied to the auxiliary equipment and the train can be run when power cannot be fed from the contact line 21. In a configuration in which switches 26b are provided, the switches 26b are turned to the side for connecting the transformer 28 to the service apparatuses/auxiliary equipment 29.

When the onboard power storage 13 is to be charged, the train is stopped at a location where a charging post 19 is provided. The onboard connector device 18a on the onboard driving system is connected to the on-post connector device 18b through a dedicated cable while the commercial power source system connection switches 32 are opened. Keeping the commercial power supply system connection switches 32 open eliminates the possibility of electric shock during connecting the onboard connector device 18a to the on-post connector device 18b. In a configuration in which the switches 26b are provided, the switches 26b are turned to the side for connecting the transformer 28 to the onboard connector device 18a.
After the onboard connector device 18a is connected to the on-post connector device 18b, the commercial power supply system connection switches 32 are turned on.
Input power to the power storage 13 is derived from the commercial power source 22. The APS 27 converts the AC power to DC power, the buck-boost chopper device 14 decreases the voltage, and the power storage 13 is charged up to an amount of charge in a predetermined range. The configuration of the present exemplary embodiment feeds AC power from the commercial power source 22 to the onboard driving system without converting it into DC power. Accordingly, the number of apparatuses on the charging post 19 can be reduced as compared with the exemplary embodiment illustrated in FIG. 4 (in which the onboard connector device 18a is provided between the power storage 13 and the buck-boost chopper device and AC power from the commercial power source 22 is converted to DC power on the charging post 19).

If the switches 26b are not provided in the present exemplary embodiment, the power storage 13 can be charged from the charging post without stopping the auxiliary equipment during charging. Therefore, the power storage 13 can be charged and emergency run to a station can be performed while maintaining passenger services on the train such as lighting and air conditioning.

While the embodiments have been described with respect to contact lines 21 that transmit DC power, the present embodiment is also applicable to contact lines 21 that transmit AC power.

In the event of an emergency in a long inter-station section, power needs to be fed from multiple charging posts and therefore it is desirable to reduce the time required for charging at each charging post. For that purpose, the onboard connector device 18a in any of the embodiments described above is preferably provided in on a side of the railcar, more preferably in a lower part of a side of the railcar, so that the railcar clew can readily connect the onboard connector device 18a to the on-post connector devices 18b along the track. Alternatively, the onboard connector device 18a is preferably provided under the floor of the railcar where electric equipment such as inverter devices are installed, more preferably the onboard connector device 18a is provided so that the connector of the onboard connector device 18a is directed toward the side or bottom of the railcar.

## Claims

1. A railway system comprising:
normal-operation power feeding equipment provided along a railway track for feeding power for normal-operations;
a railcar operating on power fed from the normal-operation power feeding equipment;
a power storage installed on the railcar and being capable of feeding power required for the railcar to run; and
inter-station power feeding equipment provided in an operating range in a section of track along which the normal-operation power feeding equipment is provided, the operating range being the range over which the railcar can run to a station with a maximum capacity of the power storage, the inter-station power feeding equipment being capable of charging the power storage;
wherein in that the inter-station power feeding equipment receives power from a power system different from the normal-operation power feeding equipment to enable the railcar to run to a station in the event of a failure of power feeding from the normal-operation power feeding equipment.

2. The railway system according to claim 1,
**characterized in that:**
the railway system comprising a plurality of pieces of the inter-station power feeding equipment provided along the track between stations,
the distance between a piece of the inter-station power feeding equipment and another piece of the inter-station power feeding equipment is less than or equal to an operating range over which the railcar can run with a maximum state of charge of the power storage.

3. The railway system according to claim 1,
**characterized in that:**
the normal-operation power feeding equipment is a contact line continuously provided along a railway track; and
the railway system further comprises current collecting equipment installed on the railcar for collecting electric current from the contact line into the railcar.

4. The railway system according to claim 1, **characterized in that** the inter-station power feeding equipment is a contact line provided in a predetermined part of section along the railway track between stations.

5. The railway system according to claim 1, **characterized in that** the inter-station power feeding equipment is a charging post provided at a predetermined location along the railway track between stations.

6. The railway system according to claim 5,
**characterized in that:**
the charging post comprises a on-post connector connectable to a railway train; and
the railcar comprises a onboard connector connectable to the on-post connector; and
when the on-post connector is connected to the onboard connector, power from a power system different form the normal-operation power feeding equipment is fed to the railcar through the charging post.

7. The railway system according to claim 6, **characterized in that** the onboard connector is installed under the floor of the railcar.

8. The railway system according to claim 6,
**characterized in that:**
the railcar comprises DC-to-three-phase-AC converter coupled to the DC side of the power storage;
the three-phase-AC side of the DC-to-three-phase-AC converter is electrically connected to the onboard connector;
three-phase-AC power can be fed from the charging post to the three-phase-AC side of the DC-to-three-phase-AC converter;
the DC-to-three-phase-AC converter includes the capability of converting three-phase AC to DC power; and
the power storage is charged with DC power converted from the three-phase-AC power by the DC-to-three-power-AC converter.

9. The railway system according to claim 8,
**characterized in that:**
the railway system further comprising:
an AC motor connected to the three-phase-AC side of the DC-to-three-phase-AC converter, receiving three-phase AC power from the DC-to-three-phase-AC converter, and outputting torque; and
a switch connected between the DC-to-three-phase-AC converter and the AC motor and switching between the connection between the DC-to-three-phase-AC and the AC motor and the connection between the DC-to-three-phase-AC converter and the onboard connector;
when power is to be fed from the charging post to the railcar, the switch connects the DC-to-three-phase-AC converter to the onboard connector to enable power to be fed from the charging post to the power storage.

10. The railway system according to claim 8,
**characterized in that:**
the railway system further comprising:
auxiliary power supply equipment connected to the three-phase AC side of the DC-to-three-phase-AC converter, receiving three-phase AC power from the DC-to-three-phase-AC converter, and feeding power to lighting or air conditioning equipment of the railcar; and
a switch connected between the DC-to-three-phase AC converter and the auxiliary power supply equipment and switching between the connection between the DC-to-three-phase-AC converter and the auxiliary equipment and the connection between the DC-to-three-phase-AC converter and the onboard connector;
**characterized in that** when power is to be fed from the charging post to the railcar, the switch connects the DC-to-three-phase-AC converter to the onboard connector to enable power to be fed from the charging post to the power storage.
